# EUROPEAN PATENT APPLICATION

(11) **EP 4 604 435 A1**
(43) Date of publication of application: **20.08.2025**
(21) Application number: 23877584.5
(22) Date of filing: 04.10.2023
(51) Int. Cl.: H04L 5/00, H04L 1/00, H04W 84/12, H04W 72/27, H04W 8/26, H04B 7/024

(54) **METHOD AND APPARATUS FOR TRANSMITTING AND RECEIVING PPDU WITHIN BSS GROUP IN WIRELESS LAN SYSTEM**

(30) Priority: 11.10.2022 KR 20220130002; 25.10.2022 KR 20220138631
(71) Applicant: LG Electronics Inc., Yeongdeungpo-gu Seoul 07336 (KR)
(72) Inventor: CHUN, Jinyoung, Seoul 06772 (KR); CHOI, Jinsoo, Seoul 06772 (KR); LIM, Dongguk, Seoul 06772 (KR); PARK, Eunsung, Seoul 06772 (KR); JANG, Insun, Seoul 06772 (KR)
(74) Representative: Frenkel, Matthias Alexander
(86) International application number: PCT/KR2023/015212
(87) International publication number: WO 2024/080656

(57) **Abstract**

Disclosed are a method and apparatus for operating in a wireless LAN system. The method performed by a first STA in a wireless LAN system, according to an embodiment of the present disclosure, comprises the steps of: receiving a beacon frame including a specific BSSID from a first access point (AP) included in a basic service set (BSS) group; on the basis of the specific BSSID, performing association on the BSS group; and receiving a first physical layer protocol data unit (PPDU) from at least one AP included in the BSS group, wherein the specific BSSID is a common BSSID used for transmitting and receiving data to and from the at least one AP, and a second PPDU may be received from a second AP from among the at least one AP on the basis of the specific BSSID without an association procedure.

## Description

### [TECHNICAL FIELD]

The present disclosure relates to a communication operation in a wireless local area network (WLAN) system, and more specifically, to a method and device for transmitting and receiving a physical layer protocol data unit (PPDU) within a basic service set (BSS) group in a next-generation wireless LAN system.

### [BACKGROUND ART]

New technologies for improving transmission rates, increasing bandwidth, improving reliability, reducing errors, and reducing latency have been introduced for a wireless LAN (WLAN) . Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for transmitting and receiving a PPDU within a BSS group in a wireless LAN system.

The technical problem of the present disclosure is to provide a method and device for supporting seamless roaming operation within a BSS group without a separate association procedure in a wireless LAN system.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless LAN system may include receiving a beacon frame including a specific BSSID from a first access point (AP) included in a BSS (basic service set) group; performing an association for the BSS group based on the specific BSSID; and receiving a first PPDU (physical layer protocol data unit) from at least one AP included in the BSS group, and the specific BSSID may be a common BSSID used for data transmission and reception with the at least one AP, and a second PPDU may be received based on the specific BSSID from a second AP among the at least one AP without an association procedure.

According to one embodiment of the present disclosure, a method performed by the first access point (AP) in a wireless LAN system may include receiving a trigger frame including a transmission area and a transmission method of a first PPDU (physical layer protocol data unit) from a representative AP; transmitting the first PPDU to a first STA based on the trigger frame; receiving response information for the first PPDU from the first STA; and transmitting response information for the first PPDU to the representative AP, and a SA (source address) or TA (transmitting address) of the first trigger frame may be set to a specific BSSID related to a BSS (basic service set) group including the first AP, and a second PPDU may be transmitted to the first STA based on the specific BSSID from a second AP among a plurality of APs including the first AP without an association procedure.

### [Technical Effects]

According to various embodiments of the present disclosure, a method and device for transmitting and receiving a PPDU within a BSS group in a wireless LAN system may be provided.

According to various embodiments of the present disclosure, a method and device for supporting continuous roaming operation within a BSS group without a separate association procedure in a wireless LAN system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram for describing various transmission and reception techniques in a MAP environment to which the present disclosure may be applied.
FIG. 9 is a flowchart for explaining the operation of a first STA according to an embodiment of the present disclosure.
FIG. 10 is a diagram for explaining the operation of a first AP according to an embodiment of the present disclosure.
FIG. 11 is a diagram for explaining a TB PPDU transmission and reception procedure between a transmitting STA and a receiving STA according to an example of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

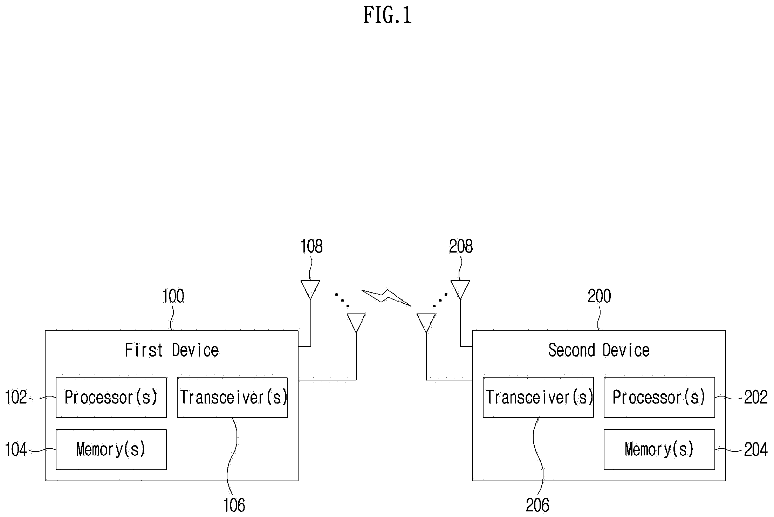

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal **(e.g.,** a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/ encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

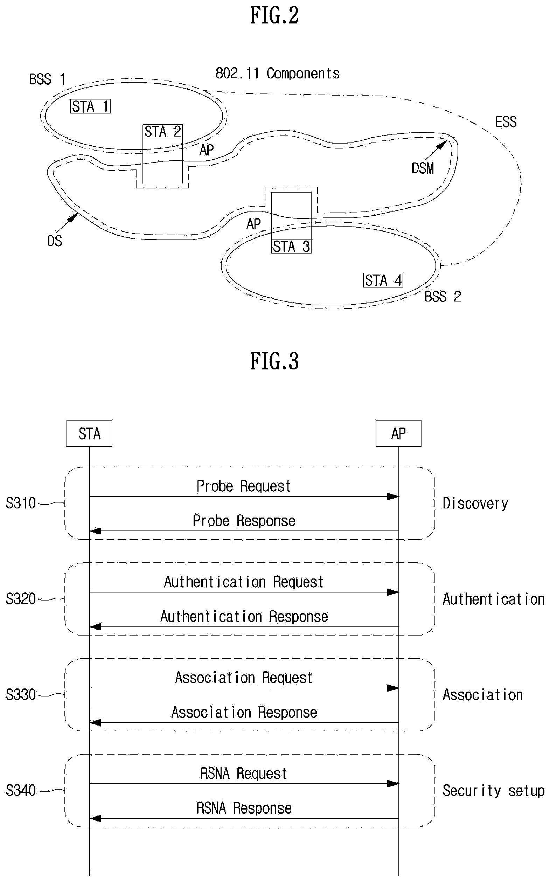

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. **2****,** a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

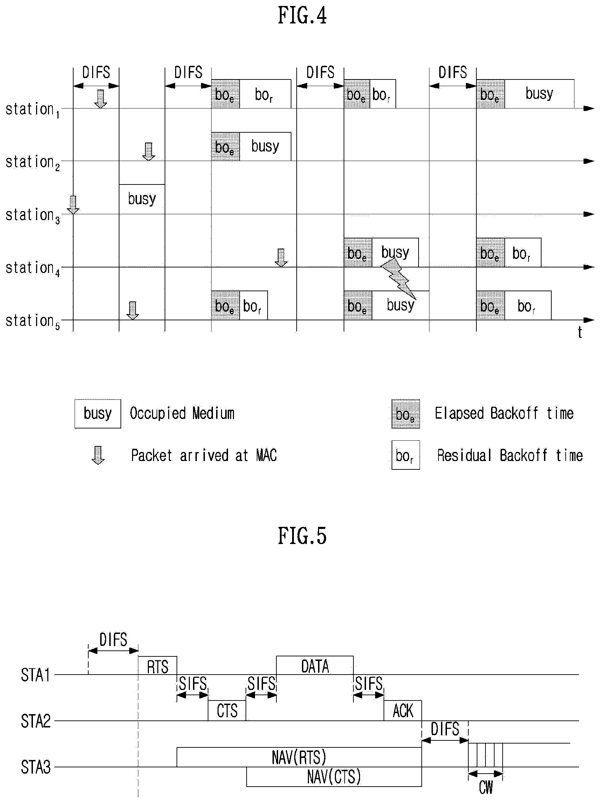

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access **(e.g.,** a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

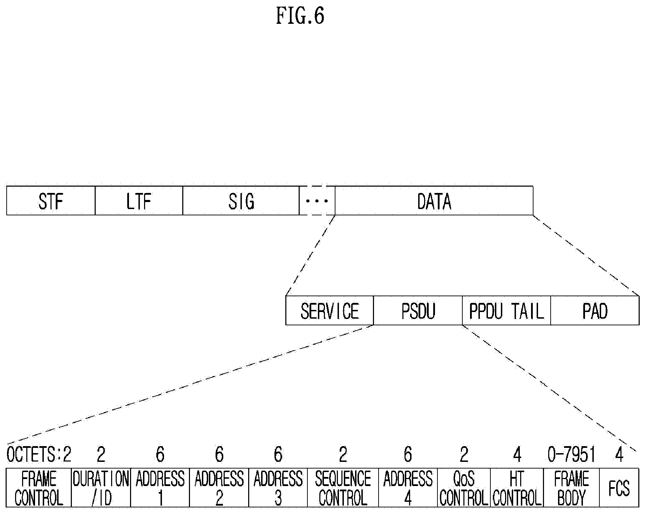

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

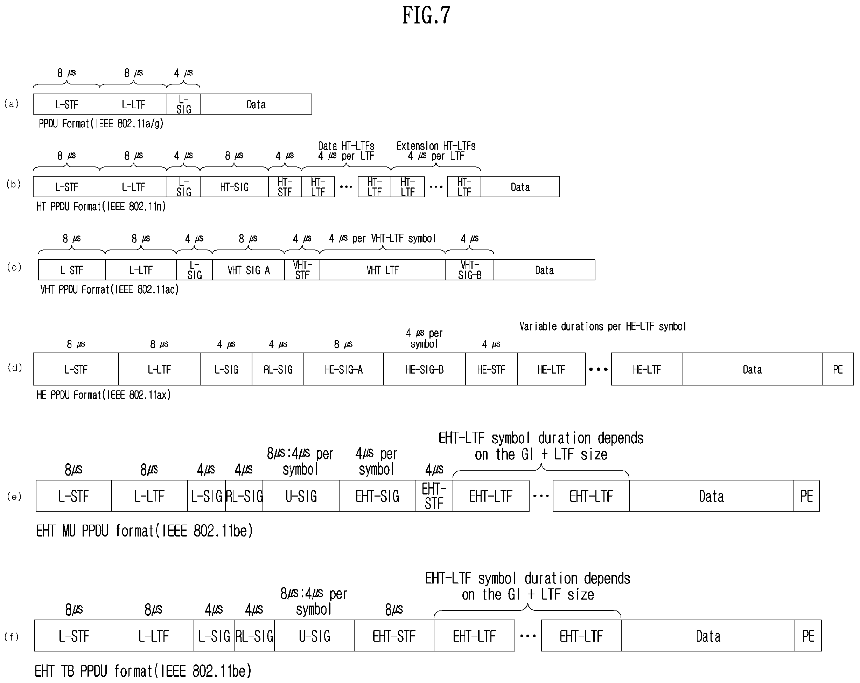

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple **of 3.** For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format (as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique **(e.g.,** a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Multiple BSSID Procedure

A single beacon frame may include elements for multiple BSSID set members. Only the AP corresponding to the transmitted BSSID may transmit the beacon frame. The AP corresponding to the transmitted BSSID may search for the non-transmitted BSSID if the beacon and probe response frames include corresponding BSSID information. However, the AP may not perform the above-described operation for all frames.

An AP transmitting an EHT NDP announcement frame identifying an EHT STA may set the TA field of the frame to the MAC address of the AP. In addition, the EHT NDP announcement frame may identify STAs in at least two different BSSs among a multi-BSSID set. In this case, the AP may set the TA field of the frame to the transmitted BSSID.

When an EHT NDP announcement frame is transmitted in a non-HT duplicate PPDU, the TA field of the EHT NDP announcement frame may be a bandwidth signal TA.

HE BSSs that are not part of a multi-BSSID set but share the same operating class, channel, receive antenna connector, and transmit antenna connector may belong to a co-hosted BSSID set. All APs that are members of a multi-BSSID set or a co-hosted BSSID set can use the same BSS color.

### Multiple access point (MAP) operation

Hereinafter, examples of the present disclosure for multi-access point (MAP) operation are described.

MAP operation may be defined as an operation between a master AP (or sharing AP) and a slave AP (or shared AP).

The master AP initiates and controls MAP operations for transmission and reception between multiple APs. The master AP groups slave APs and manages links with slave APs so that information can be shared between the slave APs. The master AP manages information on the BSSs configured by the slave APs and information on STAs associated with the BSS.

A slave AP may associate with a master AP and share control information, management information, and data traffic with each other. A slave AP performs the same basic functions of an AP that can establish a BSS in a wireless LAN.

In MAP operation, an STA may associate with a slave AP or a master AP and form a BSS.

In a MAP environment, a master AP and a slave AP may perform direct transmission and reception with each other. A master AP and a STA may not perform direct transmission and reception with each other. A slave AP (e.g., a slave AP associated with an STA) may perform direct transmission and reception with the STA. One of the slave APs may become a master AP.

MAP operation is a technique in which one or more APs transmit and receive information to one or more STAs. For example, coordinated-time division multiple access (C-TDMA) that divides allocation between APs along the time axis, coordinated-orthogonal frequency division multiple access (C-OFDMA) that divides allocation between APs along the frequency axis, and coordinated-spatial reuse (C-SR) that utilizes spatial reuse can be applied for the MAP operation. Alternatively, coordinated beamforming (C-BF) or joint beamforming techniques that cooperatively perform simultaneous transmission and reception may also be applied to the MAP operation.

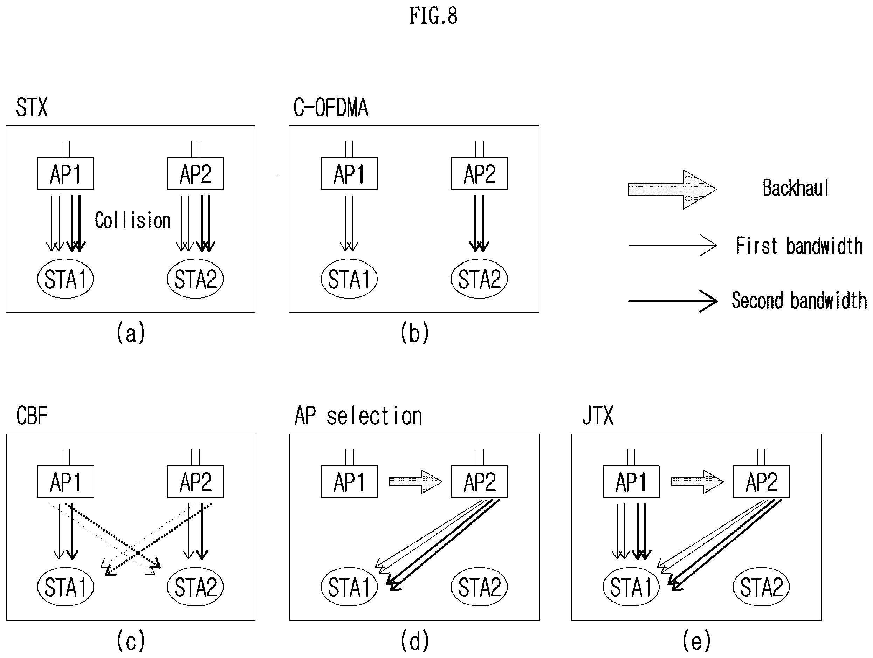

FIG. 8 is a diagram for describing various transmission and reception techniques in a MAP environment to which the present disclosure may be applied.

As in the conventional method, when a BSS AP transmits to a BSS STA, it may be referred to as STX (single transmission). In STX, there is a problem that the performance of transmission and reception for users/STAs located at the cell edge is reduced due to interference with adjacent APs. For example, as shown in Fig. 8(a), when AP 1 and AP 2 transmit to STA1 and STA2, respectively, at the same time in the same frequency bandwidth, a collision may occur on the wireless medium.

In the MAP technique, performance can be improved by reducing inter-symbol interference (ISI) through cooperation between neighboring APs, or by performing joint transmission. For example, in the C-OFDMA method of Fig. 8(b), interference can be avoided by having AP1 transmit to STA1 in the first bandwidth and AP2 transmit to STA2 in the second bandwidth at the same time.

The example of Fig. 8(c) illustrates a cooperative beamforming or nulling technique in which interference to AP2 and/or STA2 is nulled while AP1 transmits to STA1, and interference to AP1 and/or STA1 is nulled while AP2 transmits to STA2.

FIG. 8(d) shows an AP selection method in which an AP with a good channel condition among adjacent APs performs transmission.

Joint transmission (JTX) or joint reception (JRX) may be applied, in which multiple APs cooperate to transmit or receive simultaneously, as in the example of Fig. 8(e), and further, joint MU-MIMO may be supported.

### BSS group

In describing the present disclosure, a BSS group may be expressed as a virtual BSS or a seamless roaming (SR) BSS. A BSS group may mean a BSS infrastructure having a group of coordinated APs. A coordinated AP group may include one multi-AP coordinator and one or more member APs. An anchor AP may mean an AP(s) selected to serve a STA.

All member APs within a BSS group can share the same SSID and share association/authentication. In addition, all member APs within a BSS group can have the same BSSID, but are not limited thereto.

When a (non-AP) STA roams within a BSS group, no additional association/authentication may be required. The STA may use the same AID within the BSS group and may have a local copy of the capabilities of the anchor AP and neighboring AP(s).

Additionally, the STA may receive or transmit packets from any AP within the BSS group. The STA may process all data packets as if they were transmitted to or received from a single AP, based on the anchor AP.

In the past, in order to move from a specific BSS to a neighboring BSS, an STA disconnected from the specific BSS and then performed an association procedure with the neighboring BSS. That is, there was a problem in that the STA had to repeat the connection termination and association procedure every time it performed the BSS movement procedure.

Hereinafter, a method for configuring a BSS group and a procedure within a BSS group are described to ensure that there is no separate joining procedure or data transmission interruption when moving a BSS.

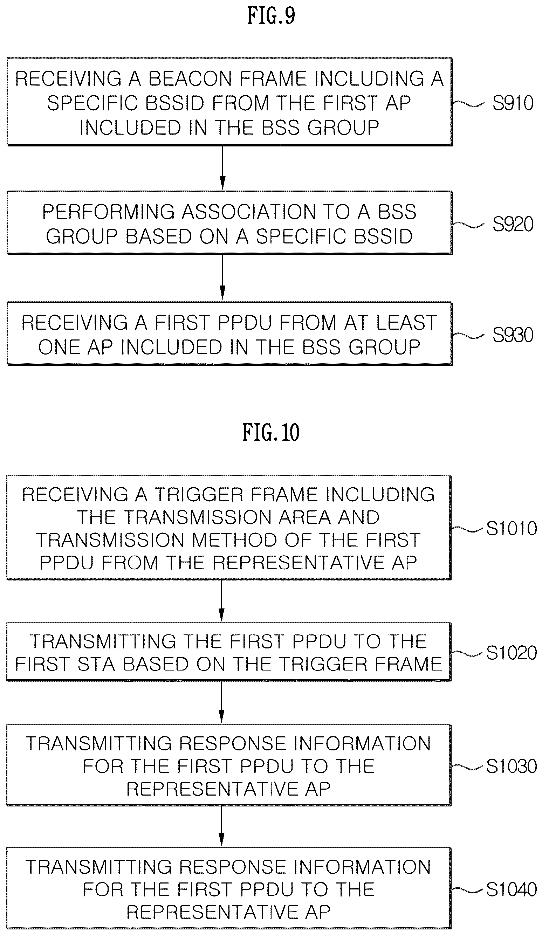

FIG. 9 is a flowchart for explaining the operation of the first STA according to one embodiment of the present disclosure. In FIG. 9 and FIG. 10, the first STA is a non-AP STA, and the first AP and the second AP may be Shared APs included in the same BSS group. The first AP and the second AP may share a specific BSSID (i.e., a common BSSID) associated with the BSS group. In addition, the representative AP may mean a Sharing AP.

The first STA may receive a beacon frame including a specific BSSID from the first access point (AP) included in the BSS (basic service set) group (S910).

For example, the beacon frame may be transmitted to the first STA based on the unique BSSID of the first AP. The first STA may obtain a specific BSSID based on the beacon frame. Here, the specific BSSID may be a common BSSID used for data transmission and reception with the at least one AP.

Here, the first STA may have a capability related to the BSS group. And, the unique BSSID may be, but is not limited to, one of the transmitted BSSIDs included in the multiple BSSID set.

The first STA may perform association to a BSS group based on a specific BSSID (S920).

That is, the first STA may perform seamless data transmission and reception with at least one AP within the BSS group by associating with the BSS group through a specific BSSID. For example, the first STA may receive the second PPDU from the second AP among the at least one AP based on the specific BSSID without an association procedure.

The first STA may receive a first PPDU (physical layer protocol data unit) from at least one AP included in the BSS group (S930).

For example, the first STA may simultaneously receive the first PPDU from at least one AP included in the BSS group. A trigger frame including a transmission area and a transmission method of the first PPDU may be transmitted from the representative AP to at least one AP. DA or RA of the trigger frame can be set to a specific BSSID, and at least one AP may transmit the first PPDU to the first STA based on the trigger frame.

The first STA may transmit response information for the first PPDU to at least one AP. The RA (receiving address) field or the DA (destination address) field of the first frame including the response information may be set to a specific BSSID.

For example, the response information may include information on the reception state of the first PPDU and channel information. The channel information may include at least one of a received signal strength indicator (RSSI) or a signal to inference plus noise ratio (SINR).

And, the first frame may be at least one of an ACK (acknowledge) frame or a BA (block ACK) frame. And, at least one of the ACK frame or the BA frame may include a HT (high throughput) control field including channel information.

The response information may be transmitted from at least one AP to the representative AP via a second frame based on the transmission area and transmission method included in the trigger frame. The SA (source address) or TA (transmitting address) of the second frame may be set to a unique BSSID of each of at least one AP.

The method performed by the first STA described in the example of FIG. 9 may be performed by the first device (100) of FIG. 1. For example, one or more processors (102) of the first device (100) of FIG. 1 may be configured to receive a beacon frame including a specific BSSID from a first access point (AP) included in a BSS group through one or more transceivers (106). The one or more processors (102) may perform association for the BSS group based on the specific BSSID. The one or more processors (102) may receive a first PPDU from at least one AP included in the BSS group through one or more transceivers (106).

Furthermore, one or more memories (104) of the first device (100) may store instructions for performing the method described in the example of FIG. 9 when executed by one or more processors (102).

FIG. 10 is a drawing for describing the operation of the first AP according to one embodiment of the present disclosure.

The first AP may receive a trigger frame including the transmission area and transmission method of the first PPDU from the representative AP (S1010).

For example, the transmission area of the first PPDU may include information on at least one resource area for transmitting the first PPDU. In addition, the transmission method of the first PPDU may include at least one of a coding type, a modulation and coding scheme (MCS), and a number of streams related to the transmission of the first PPDU.

Here, the SA (source address) or TA (transmitting address) of the first trigger frame may be set to a specific BSSID associated with the BSS group including the first AP.

The first AP may transmit the first PPDU to the first STA based on the trigger frame (S1020).

That is, the first AP may transmit the first PPDU to the first STA based on at least one resource region indicated by the trigger frame, the coding type, the MCS, and the number of streams associated with the first PPDU transmission.

The first AP may transmit response information for the first PPDU to the representative AP (S1030). Accordingly, the representative AP may determine the channel state between the first AP and the first STA.

And, the second PPDU may be transmitted to the first STA based on a specific BSSID from the second AP among the plurality of APs including the first AP without an association procedure. Here, the plurality of APs including the first AP may refer to Shared APs included in the same BSS group. That is, the plurality of APs may include the first AP, the second AP, etc. That is, the second AP can transmit the second PPDU to the first STA based on a specific BSSID without a separate association procedure.

The method performed by the first AP described in the example of FIG. 10 may be performed by the second device (200) of FIG. 1. For example, one or more processors (202) of the second device (200) of FIG. 1 may receive a trigger frame including a transmission area and a transmission method of the first PPDU from the representative AP through one or more transceivers (206). The one or more processors (202) may transmit the first PPDU to the first STA through the one or more transceivers (206) based on the trigger frame. The one or more processors (202) may receive response information for the first PPDU from the first STA through the one or more transceivers (206). The one or more processors (202) may transmit response information for the first PPDU to the representative AP through the one or more transceivers (206).

Furthermore, one or more memories (204) of the second device (200) may store instructions for performing the method described in the example of FIG. 10 when executed by one or more processors (202).

Hereinafter, the method of forming a group of one or more APs (or/and BSSs) and the MAP operation within the group are described in detail.

### Embodiment 1

A BSS group (i.e., virtual (V)-BSS or SR-BSS) may include one or more BSSs. STAs transmitting and receiving data with APs included in the BSS group may perform continuous roaming between APs without separate association for each AP (or through a simple (re)association procedure).

Here, one or more BSSs may be configured as a BSS group within an ESS having the same SSID. The BSS group may be configured differently for each STA, and multiple BSS groups may exist within the same ESS. In addition, the same BSS may be operated overlapping within multiple BSS groups.

A representative AP may schedule the selection of AP(s) for operation within a BSS group (i.e., V-BSS or SR-BSS operation) and communication with STAs. Here, the representative AP can also be expressed as a Sharing AP, a Master AP, an AP coordinator, a Multi-AP coordinator, etc.

Each AP within a BSS group may have multiple BSSIDs, and one of the multiple BSSIDs may be commonly used by all APs for transmitting and receiving BSS group data.

For example, when an AP has multiple BSSID sets, each AP within a BSS group may have a unique transmitted BSSID and may transmit a beacon frame based on the unique transmitted BBSID. Additionally, the APs within a BSS group may have a common non-transmitted BSSID. In this case, the non-transmitted BSSID may be used to transmit and receive data within the BSS group.

As another example, the MAC addresses or BSSIDs of APs included in the same BSS group may be set to a common value, and STAs may regard the APs as one AP.

Hereinafter, the unique BSSID of each AP is referred to as the unique BSSID, and the BSSID commonly used for data transmission and reception (i.e., V-BSS/SR-BSS data transmission and reception) within the BSS group is referred to as the common BSSID.

Here, AP may refer to a single physical AP, but may also refer to co-located APs. Also, different APs may be set for each BSSID. For example, one of the physically co-located APs may have a common BSSID and the other may have a unique BSSID.

Alternatively, when a multi-link device (MLD) or a multi-BSSID set is applied to BSSID-related operations, the BSSID may be set according to the method described below.

In the first method, one of the MLD links may be set as a BSSID for a BSS group, and the dual connectivity operation described below may be possible. Specifically, in the 2.4/5/6 GHz bands with wide coverage, seamless roaming between APs can be supported by setting it as a BSSID for a BSS group, and in the 5/6/60 GHz bands with heavy transmission, operation based on the AP's own BSSID can be supported.

Alternatively, one link can be designated for a BSS group and the link can be used only for data transmission without transmitting management frames (e.g., beacon frames), thereby supporting seamless data roaming.

In a second way, one of the transmitted BSSIDs included in the multi-BSSID set can be set as the BSSID for the BSS group, and the dual connection operation described below can be supported. For example, the transmitted BSSID can be used for management frames (e.g., beacon frames, etc.) and communication in the BSS of one AP. The non-transmitted BSSID can be used to support seamless roaming between APs.

Within a BSS group, the associating operation can be performed using either a common BSSID or a unique BSSID. Data transmission and reception can be performed using another BSSID within the BSS group without a separate (re)associating operation (or through a simplified (re)associating operation). The above-described operation can be applied to both the first and second methods.

That is, in a basic wireless LAN system, when operating a multi-link, the association operation must be performed separately for each link. However, when operating a BSS group, if the association operation is performed based on one BSSID, separate association operations may not be required for other links.

### Embodiment 1-1

Embodiment 1-1 relates to a data transmission and reception procedure within a BSS group.

Non-AP STAs with BSS group-related capabilities within a BSS group may receive a beacon frame transmitted with a unique BSSID. Non-AP STAs can obtain common BSSID information (e.g., common BSSID, common capabilities, etc.) of the BSS group through the beacon frame, and perform association based on the common BSSID, thereby commonly associating with the BSS group.

As another example, non-AP STAs may perform association through a unique BSSID and then report association-related information to the Sharing AP. Accordingly, the Sharing AP may perform association with other APs/non-APs through a common BSSID or share associated STA information with APs.

For example, a common BSSID may be used for data transmission and reception within a BSS group. When a non-AP STA transmits and receives data with multiple APs within a BSS group, it may operate as if transmitting and receiving data with a single AP without a separate association procedure (or with only a simple association procedure) (e.g., information sharing between APs).

As an example of the present disclosure, APs operating within a BSS group must follow the instructions of the Sharing AP when transmitting data, and can report information about data reception from non-AP STA(s) to the Sharing AP. That is, data transmission and reception within a BSS group can proceed according to the procedure described below.

### 1. transmitting a Sharing AP indication message

The Sharing AP may determine the AP(s) (i.e., the Shared AP(s)) to transmit and receive data within the BSS group. Then, the Sharing AP may transmit an indication message including the ID of the determined AP(s) (e.g., the BSSID of the corresponding AP(s) for distinguishing the corresponding AP(s)), a transmission area (e.g., resource allocation information), and a transmission method (e.g., coding type, MCS, number of streams, etc.) to the determined AP(s). The transmission area and the method for transmitting and receiving data may be common information to the Shared AP(s).

Additionally or alternatively, the indication message transmitted by the Sharing AP may include the transmission power of the Shared AP(s).

Here, the Sharing AP may transmit the above-described indication message to the AP(s) through the trigger frame. For example, the destination address (DA) or receiving address (RA) of the indication message can be set to a common BSSID or broadcast ID. That is, the DA or RA of the trigger frame including the indication message can be set to a common BSSID or broadcast ID.

### 2. Simultaneous data transmission of shared Aps

The method of data transmission within a BSS group may include a method in which Shared APs simultaneously transmit the same data in the same area using the same method, unlike other multi-AP operations such as C-TX (coordinated transmission) or J-TX (joint transmission).

Here, the TA (transmitting address) or SA (source address) of the data frame transmitted within the BSS group can be set to a common BSSID within the BSS group. And, the shared AP(s) may simultaneously transmit the corresponding data frame in the same PPDU format.

In a basic wireless LAN system, the format of the frame transmitted after the trigger format is UL TB PPDU. However, within the BSS group, instead of UL, a SU (single-user) or MU (multi-user) DL message transmitted by a Shared AP to a non-AP STA (e.g., DL MU OFDMA format of the IEEE 802.11 be standard) can be transmitted and received.

### Transmission of ACK message by non-AP STA(s) that received data

Assume that the shared AP(s) transmit data (simultaneously). The non-AP STA that received the data from the shared AP(s) cannot know which shared AP within the BSS group transmitted the data. Therefore, the non-AP STA(s) may transmit a response message for the received data by setting the DA (destination address) or RA (receiving address) to a common BSSID, which is the TA (transmitting address) or SA (source address) on the received data.

Here, the response message may include channel information as well as information about the reception state (e.g., ACK/NACK information). For example, the response message may be included in an ACK frame or a BA frame defined in the IEEE 802.11 standard, and the frame may include an HT control including channel information.

Alternatively, an MPDU including information such as RSSI (received signal strength indicator) or SINR (signal to inference plus noise ratio) may be merged into the frame and transmitted to the shared AP(s).

4. Shared AP(s) report the received ACK message to Sharing AP.

Shared AP(s) may report response messages (e.g., ACK messages, etc.) received from non-AP STA(s) to the Shared AP.

As an example of the present disclosure, the Shared AP(s) may set the SA or TA of the report message reported to the Sharing AP to a unique BSSID. Accordingly, the Shared AP(s) may each transmit the report message to the Sharing AP.

Here, the indication message transmitted by the Sharing AP described in Procedure 1 (i.e., the trigger frame including the indication message) may separately indicate the transmission area (e.g., resource allocation, etc.) and data transmission method (e.g., coding type, MCS, number of streams, etc.) of each Shared AP(s). Each Shared AP(s) may report link quality information (e.g., reception power, RSSI, SINR, etc.) of the response message received from non-AP STA(s) to the Sharing AP. Accordingly, the Sharing AP can identify the channel state between the non-AP STA(s) and each Shared AP(s).

As another example of the present disclosure, the Shared AP(s) may directly forward a response message received from non-AP STA(s) to the Sharing AP, but may change the DA or RA of the response message to information related to the Shared AP (e.g., the ID of the Shared AP, etc.). As another example, the Shared AP(s) may encapsulate a response message in which the SA or TA is set to a common BSSID in the BSS group and the DA or RA is set to the BSSID of the Shared AP, and report it to the Sharing AP.

Uplink data transmission and reception within a BSS group can be performed based on UL TB PPDU transmission and reception by a trigger frame, or based on UL SU PPDU after acquiring a TXOP (transmission opportunity).

For example, when uplink data transmission/reception based on UL TB PPDU by trigger frame is performed within a BSS group, the transmission of the indication message of the Sharing AP described in procedure 1 may be performed prior to transmission of the trigger frame of the Shared AP(s). In addition, after receiving the uplink data, the Shared AP(s) may transfer the data to the Sharing AP as in procedure 4.

### Embodiment 2

Embodiment 2 relates to a method for setting a set of Shared APs capable of transmitting and receiving data with each non-AP STA within a BSS group.

Non-AP STA(s) may overhear beacon messages that can be heard within the BSS group. Non-AP STA(s) can report overheard channel information (e.g., received power, RSSI, SINR, etc.) to each Shared AP based on a unique BSSID, and each Shared AP may report the reported information to the Sharing APs.

The Sharing AP may determine the Shared APs to transmit and receive with non-AP STAs based on the information reported by the Shared APs. The reported information may be updated by periodic indications from the Sharing AP or by self-reporting from the non-AP STAs.

The above reporting information can also be updated through link quality information of the ACK message in procedure 4 of Embodiment 1-1. Additionally or alternatively, the update of the above reporting information can be performed based on the NDP sounding procedure.

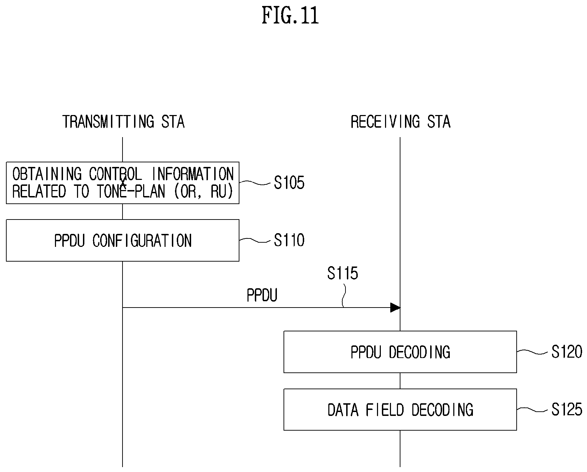

FIG. 11 is a diagram for describing a PPDU transmission and reception procedure between a transmitting STA and a receiving STA according to one embodiment of the present disclosure. Some step(s) shown in FIG. 11 may be omitted depending on situations and/or settings. The transmitting device and the receiving STA may be an AP and/or a non-AP STA.

The transmitting STA can obtain control information related to the tone plan (or RU) described above (S105). The control information related to the tone plan can include the size and location of the RU, control information related to the RU, information about the frequency band in which the RU is included, information about the STA receiving the RU, etc.

The transmitting STA may configure/generate a PPDU based on the acquired control information (S110). Configuring/generating a PPDU may mean configuring/generating each field of the PPDU. That is, the step of configuring/generating a PPDU may include a step of configuring an EHT-SIG-A/B/C field including control information regarding a tone plan.

That is, the step of configuring/generating a PPDU may include a step of configuring a field including control information (e.g., an N bitmap) indicating the size/position of the RU and/or a step of configuring a field including an identifier (e.g., an AID) of an STA receiving the RU.

Additionally, the step of configuring/generating a PPDU may include a step of generating an STF/LTF sequence to be transmitted via a specific RU. The STF/LTF sequence may be generated based on a preset STF generation sequence/LTF generation sequence.

Additionally, the step of constructing/generating a PPDU may include a step of generating a data field (i.e., an MPDU) to be transmitted via a particular RU.

The transmitting STA may transmit the configured/generated PPDU to the receiving STA (S115).

Specifically, the transmitting STA may perform at least one of cyclic shift diversity (CSD), spatial mapping, inverse discrete fourier transform (IDFT)/inverse fast fourier transform (IFFT) operation, and guard interval (GI) insertion operation.

A receiving STA may decode the PPDU and obtain control information related to the tone plan (or RU) (S120).

Specifically, the receiving STA may decode the L-SIG and EHT-SIG of the PPDU based on the L-STF/LTF, and obtain information included in the L-SIG and EHT SIG fields. Information about various tone-plans (i.e., RUs) of the present disclosure may be included in the EHT-SIG (e.g., EHT-SIG-A/B/C), and the receiving STA can obtain information about the tone-plan (i.e., RU) through the EHT-SIG.

The receiving STA may decode the remaining part of the PPDU based on the information about the acquired tone-plan (i.e., RU) (S125). For example, the receiving STA may decode the STF/LTF field of the PPDU based on the information about the tone-plan (i.e., RU). In addition, the receiving STA may decode the data field of the PPDU based on the information about the tone-plan (i.e., RU) and obtain the MPDU included in the data field.

In addition, the receiving STA may perform a processing operation to transfer the decoded data to a higher layer (e.g., a MAC layer). In addition, if the generation of a signal is instructed from the higher layer to the PHY layer in response to the data transferred to the higher layer, the receiving STA may perform a subsequent operation.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method performed by a first station (STA) in a wireless LAN system, the method comprising:
receiving a beacon frame including a specific BSSID from a first access point (AP) included in a BSS (basic service set) group;
performing an association for the BSS group based on the specific BSSID; and
receiving a first PPDU (physical layer protocol data unit) from at least one AP included in the BSS group,
wherein the specific BSSID is a common BSSID used for data transmission and reception with the at least one AP, and
wherein a second PPDU is received based on the specific BSSID from a second AP among the at least one AP without an association procedure.

2. The method of claim 1, wherein:
response information for the first PPDU is transmitted to the at least one AP, and
a RA (receiving address) field or a DA (destination address) field of the first frame including the response information is set to the specific BSSID.

3. The method of claim 2, wherein:
the response information includes information on a reception state of the first PPDU and channel information, and
the channel information includes at least one of a received signal strength indicator (RSSI) or a signal to inference plus noise ratio (SINR).

4. The method of claim 2, wherein:
the first frame is at least one of an ACK (acknowledge) frame or a BA (block ACK) frame, and
at least one of the ACK frame or the BA frame includes an HT (high throughput) control field including the channel information.

5. The method of claim 1, wherein:
the first PPDU is transmitted simultaneously from at least one AP to the first STA.

6. The method of claim 1, wherein:
a trigger frame including a transmission area and transmission method of the first PPDU is transmitted from a representative AP to the at least one AP, and
a DA or RA of the trigger frame is set to the specific BSSID.

7. The method of claim 6, wherein:
the response information is transmitted from the at least one AP to the representative AP through a second frame based on the transmission area and transmission method included in the trigger frame, and
a SA (source address) or TA (transmitting address) of the second frame is set to a unique BSSID of each of the at least one AP.

8. The method of claim 1, wherein:
the specific BSSID is one of the transmitted BSSIDs included in a multiple BSSID set.

9. The method of claim 1, wherein:
the first STA has a capability related to the BSS group.

10. A first station (STA) operating in a wireless LAN system, the first STA comprising:
at least one transceiver; and
at least one processor coupled to the at least one transceiver,
wherein the at least one processor is configured to:
receive a beacon frame including a specific BSSID from a first access point (AP) included in a BSS (basic service set) group through the at least one transceiver;
perform an association for the BSS group based on the specific BSSID; and
receive a first PPDU (physical layer protocol data unit) from at least one AP included in the BSS group through the at least one transceiver,
wherein the specific BSSID is a common BSSID used for data transmission and reception with the at least one AP, and
wherein a second PPDU is received based on the specific BSSID from a second AP among the at least one AP without an association procedure.

11. A method performed by the first access point (AP) in a wireless LAN system, the method comprising:
receiving a trigger frame including a transmission area and a transmission method of a first PPDU (physical layer protocol data unit) from a representative AP;
transmitting the first PPDU to a first STA based on the trigger frame;
receiving response information for the first PPDU from the first STA; and
transmitting response information for the first PPDU to the representative AP,
wherein a SA (source address) or TA (transmitting address) of the first trigger frame is set to a specific BSSID related to a BSS (basic service set) group including the first AP, and
wherein a second PPDU is transmitted to the first STA based on the specific BSSID from a second AP among a plurality of APs including the first AP without an association procedure.

12. A first access point (AP) operating in a wireless LAN system, the first AP comprising:
at least one transceiver; and
at least one processor coupled to the at least one transceiver,
wherein the at least one processor is configured to:
receive a trigger frame including a transmission area and a transmission method of a first PPDU (physical layer protocol data unit) from a representative AP through the at least one transceiver;
transmit the first PPDU to a first STA based on the trigger frame through the at least one transceiver;
receive response information for the first PPDU from the first STA through the at least one transceiver; and
transmit response information for the first PPDU to the representative AP through the at least one transceiver,
wherein a SA (source address) or TA (transmitting address) of the first trigger frame is set to a specific BSSID related to a BSS (basic service set) group including the first AP, and
wherein a second PPDU is transmitted to the first STA based on the specific BSSID from a second AP among a plurality of APs including the first AP without an association procedure.

13. A processing apparatus configured to control a first station operated (STA) in a wireless LAN system, the processing apparatus comprising:
at least one processor; and
at least one computer memory operably connected to the at least one processor and storing instructions that, based on being executed by the at least one processor, perform operations comprising:
receiving a beacon frame including a specific BSSID from a first access point (AP) included in a BSS (basic service set) group;
performing an association for the BSS group based on the specific BSSID; and
receiving a first PPDU (physical layer protocol data unit) from at least one AP included in the BSS group,
wherein the specific BSSID is a common BSSID used for data transmission and reception with the at least one AP, and
wherein a second PPDU is received based on the specific BSSID from a second AP among the at least one AP without an association procedure.

14. At least one non-transitory computer-readable medium storing at least one instruction,
wherein the at least one instruction executable by at least one processor controls a device in a wireless LAN system to:
receiving a beacon frame including a specific BSSID from a first access point (AP) included in a BSS (basic service set) group;
performing an association for the BSS group based on the specific BSSID; and
receiving a first PPDU (physical layer protocol data unit) from at least one AP included in the BSS group,
wherein the specific BSSID is a common BSSID used for data transmission and reception with the at least one AP, and
wherein a second PPDU is received based on the specific BSSID from a second AP among the at least one AP without an association procedure.
